Europäisches Patentamt

European Patent Office

Office européen des brevets

(19)

(11) **EP 0 716 870 A1**

(12) **EUROPÄISCHE PATENTANMELDUNG**

(43) Veröffentlichungstag:
    **19.06.1996 Patentblatt 1996/25**

(51) Int. Cl.$^6$: **B01D 19/04**, C11D 3/00,
    C11D 3/37, C08L 83/04

(21) Anmeldenummer: 95119089.1

(22) Anmeldetag: 05.12.1995

(84) Benannte Vertragsstaaten:
    **AT BE DE ES FR GB IT NL**

(30) Priorität: **12.12.1994 DE 4444175**

(71) Anmelder: **Hüls Silicone Gesellschaft mit
beschränkter Haftung
D-01610 Nünchritz (DE)**

(72) Erfinder:
- **Rautschek, Holger, Dr. rer. nat.
  D-01612 Nünchritz (DE)**
- **Schickmann, Harald
  D-01662 Meissen (DE)**
- **Otto, Reiner
  D-01612 Nünchritz (DE)**

(74) Vertreter: **Zöllner, Gudrun
  Hüls Silicone GmbH
  D-01610 Nünchritz (DE)**

(54) **Entschäumerzubereitungen auf der Basis von Siloxanen**

(57)    Die Erfindung betrifft Entschäumerzubereitungen auf der Basis von Siloxanen, welche mindestens ein verzweigtes, flüssiges Polyorganosiloxan enthalten, sowie ein Verfahren zu ihrer Herstellung.

EP 0 716 870 A1

**Beschreibung**

Die Erfindung betrifft Entschäumerzubereitungen auf der Basis von Siloxanen, welche mindestens ein verzweigtes, flüssiges Polyorganosiloxan enthalten, sowie ein Verfahren zu ihrer Herstellung.

In vielen flüssigen, insbesondere wäßrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siliconbasis besonders bewährt.

Entschäumer auf der Basis von Siloxanen werden beispielsweise nach DD-PS 056 762 durch Erhitzen von hydrophiler Kieselsäure in Polydimethylsiloxanen hergestellt. Dieses Verfahren ist recht aufwendig, trotzdem ist die Wirksamkeit der so hergestellten Entschäumer nicht zufriedenstellend. Die Verteilung von hydrophobierter Kieselsäure in einem Polydimethylsiloxan, z. B. entsprechend DE-OS 29 25 722, ist ein rationelleres Verfahren, die Wirksamkeit der erhaltenen Entschäumer aber ebenfalls verbesserungswürdig.

Die Verwendung von modifizierten Polyorganosiloxanen in Entschäumerzubereitungen ist Gegenstand zahlreicher Erfindungen. Derartige modifizierte Siloxane können durch radikalische Reaktionen (z. B. EP 273 448, DE 38 05 611) oder Kondensationsreaktionen (EP 163 541, EP 169 500) hergestellt werden. Diese Prozesse sind durch Nebenreaktionen (unerwünschte Quervernetzung, Siloxanspaltung, Si-C-Spaltungen durch radikalischen Angriff etc.) gekennzeichnet und daher nur schwer beherrschbar.

Eine weitere Variante der Herstellung von Siloxanen für Entschäumeranwendungen stellen Hydrosilylierungsreaktionen dar. Durch den eindeutigen Reaktionsverlauf sind derartig modifizierte Siloxankomponenten besonders geeignet.

Nach JP 61 197 007 wird die Wirksamkeit von Entschäumeremulsionen oder Entschäumerdispersionen verbessert, wenn der Entschäumer vinylgruppenterminierte und Si-H-terminierte Siloxane enthält und die Emulsion bzw. Dispersion in Gegenwart von Platinkatalysator erhitzt wird. Dabei werden in der Emulsion bzw. Dispersion hochmolekulare lineare Polydiorganosiloxane gebildet.

EP 499 364 lehrt die Herstellung von Entschäumeremulsionen bei denen der Siliconentschäumer in der Emulsion zum Gelieren gebracht wird, womit sich die Wirksamkeit in wäßrigen Detergentien erhöht. Diese Gelierung kann unter anderem analog zu additionsvernetzenden RTV-2 Kautschuken durch die platinkatalysierte Reaktion von vinyldimethylsiloxyterminierten Polydiorganosiloxanen mit polyfunktionellen Hydrogensiloxanen erfolgen.

Nachteilig bei diesen Verfahren ist, daß keine flüssigen, universell einsetzbaren bzw. weiterverarbeitbaren Siliconentschäumer erhalten werden, sondern Emulsionen bzw. Dispersionen. Die Anwendung in nichtwäßrigen Systemen sowie der Einsatz in festen Waschmitteln ist damit nur bedingt möglich.

Diese Nachteile werden in EP 434 060 behoben, indem flüssige Entschäumer entsprechend US 3 020 260 bzw. US 4 477 626 hergestellt werden, die schwach vernetzte, noch fließfähige Siloxane enthalten. US 3 020 260 offenbart die Herstellung von nicht mehr fließfähigen Silicongelen durch platinkatalysierte Umsetzung von Si-H-terminierten Polydiorganosiloxanen mit Polydiorganosiloxanen, die mehrere seitenständige Vinylgruppen im Molekül enthalten, wobei ein besonderes Verhältnis der Anzahl der Si-H-Gruppen zur Anzahl der Polymermoleküle des vinylgruppenhaltigen Polymers wesentlich ist. US 4 477 626 beschreibt die Herstellung von härtbaren Gelen durch Umsetzung von Polydiorganosiloxanen mit mindestens zwei Vinylgruppen im Molekül mit Polydiorganosiloxanen mit mindestens zwei Si-H-Gruppen in Gegenwart von Platinkatalysator, fein verteiltem Siliciumdioxid und einem hydroxylgruppenhaltigen Siloxan. Die Penetration der entsprechend US 3 020 260 bzw. 4 477 626 hergestellten Gele entspricht jedoch nicht den Anforderung für die Herstellung von Entschäumerzubereitungen.

Besonders kritisch bei der Herstellung flüssiger, vernetzter Polyorganosiloxane ist die Steuerung eines niedrigen Vernetzungsgrades. Si-H- und Vinylgruppen dürfen dabei nicht im stöchiometrischen Verhältnis vorliegen, da sonst ein festes, nicht mehr weiterverarbeitbares Gel entsteht. Im ungünstigsten Fall kann es durch technisch oder subjektiv verursachte Fehldosierungen oder auch durch mischungsbedingte, kurzzeitige Abweichungen von der gewünschten Stöchiometrie zur Unbrauchbarkeit des gesamten Ansatzes kommen. Weiterhin müssen nicht umgesetzte Si-H-Gruppen auf Grund ihrer störenden Reaktivität entfernt werden, beispielsweise durch Destillation, bei Verwendung von flüchtigen Si-H-haltigen Siloxanen (DE 42 23 644), oder durch Zugabe von alkalischen Katalysatoren, bei Einsatz von nichtflüchtigen Si-H-haltigen Copolymeren. Beide Verfahren sind mit einem erhöhten Aufwand verbunden.

Es bestand daher die Aufgabe, universell weiterverarbeitbare, hochwirksame Entschäumerzubereitungen bereitzustellen, welche unkompliziert herstellbar sind, und die Gefahr einer Gelierung bei der Herstellung ausschließen.

Diese Aufgabe wird gelöst, indem Entschäumerzubereitungen hergestellt werden, die mindestens ein verzweigtes, flüssiges Polyorganosiloxan enthalten, welches hergestellt wird durch Umsetzung von

einem Organosiloxan A mit statistisch verteilten, durchschnittlich weniger als 2 funktionellen Gruppen pro Molekül mit

einem Organosiloxan B mit statistisch verteilten, durchschnittlich mehr als 2 funktionellen Gruppen pro Molekül,

2

in Gegenwart eines Hydrosilylierungen fördernden Katalysators, wie beispielsweise Platin oder Platinverbindungen,

wobei die funktionellen Gruppen in A oder B entweder siliciumgebundene Wasserstoffatome oder ungesättigte Kohlenwasserstoffreste sind und pro Siloxan A oder B jeweils nur eine Art an funktionellen Gruppen vorliegt. Das heißt, daß entweder die siliciumgebundenen Wasserstoffatome im Siloxan A mit den ungesättigten Kohlenwasserstoffresten im Siloxan B durch Hydrosilylierungsreaktionen verknüpft werden, oder daß Siloxan A ungesättigte Reste enthält, die mit den Si-H-Gruppen im Siloxan B reagieren können.

Das Organosiloxan A weist üblicherweise statistisch verteilt durchschnittlich 0,1 bis 1,7, beispielsweise 0,2 bis 1,5, funktionelle Gruppen pro Molekül auf. Besonders bevorzugt sind Organosiloxane des Types A, welche statistisch verteilt durchschnittlich 0,3 bis 1,0 funktionelle Gruppen pro Molekül aufweisen.

Das Organosiloxan B weist üblicherweise statistisch verteilt durchschnittlich mehr als 3 funktionelle Gruppen, bevorzugt 4 bis 20 funktionelle Gruppen, pro Molekül auf.

Der Begriff statistisch verteilt besagt, daß die funktionellen Gruppen in den Organosiloxanen A bzw. B entsprechend den Gesetzen der Wahrscheinlichkeitslehre auf die einzelnen Polymermoleküle verteilt sind, daß es sich also nicht um einfache Gemische von Polymeren mit funktionellen Gruppen, sondern um Polymere handelt, bei denen durch Äquilibrierungsreaktionen das thermodynamische Gleichgewicht erreicht wurde.

Das stöchiometrische Verhältnis der statistisch verteilten funktionellen Gruppen von Organosiloxan A zu Organosiloxan B beträgt vorzugsweise 0,8 bis 1,2.

Eine bevorzugte Variante der Herstellung des Organosiloxanes A ist die Umsetzung von einem Organosiloxan mit statistisch verteilten, durchschnittlich mindestens 2 funktionellen Gruppen mit einem Organosiloxan, welches keine funktionellen Gruppen aufweist, beispielsweise durch Umsetzung von dimethylvinylsiloxyterminiertem Polydimethylsiloxan mit trimethylsiloxyterminiertem Polydimethylsiloxan in Gegenwart eines die Äquilibrierung fördernden Katalysators.

Die Organosiloxane A und B genügen folgender allgemeiner Formel:

$$R_a(R^1O)_bR^2_cSiO_{(4-a-b-c)/2} \qquad (I),$$

worin
R gleiche und/oder verschiedene, substituierte und/oder unsubstituierte, gesättigte, aliphatische und/oder aromatische, einwertige Kohlenwasserstoffreste mit 1 bis 30 Kohlenstoffatomen,
$R^1$ entweder Wasserstoff oder R und
$R^2$ entweder Wasserstoff oder ungesättigte Kohlenwasserstoffreste mit der Maßgabe darstellen, daß bei Organosiloxan A pro Molekül statistisch verteilt, durchschnittlich weniger als zwei gleichartige Reste $R^2$ sowie bei Organosiloxan B pro Molekül statistisch verteilt, durchschnittlich mehr als zwei gleichartige Reste $R^2$ gebunden sind und pro Siloxan A oder B jeweils nur eine Art an funktionellen Gruppen vorliegt, sowie
die Summe (a+b+c) ganze oder gebrochene Zahlen zwischen 1 und 3 annimmt, vorzugsweise zwischen 1,8 und 2,2 und der Wert von b vorzugsweise kleiner als 0,1, besonders bevorzugt 0 ist, d. h. siliciumgebundene Alkoxy- oder Hydroxygruppen sind nur als Verunreinigung im Spurenbereich enthalten.

Die Siloxane A und B entsprechen bevorzugt der allgemeinen Formel

$$R^3_3SiO(SiR^3_2O)_nSiR^3_3 \qquad (II),$$

wobei $R^3$ entweder R oder $R^2$ mit den oben angeführten Maßgaben ist. Sie bestehen im wesentlichen aus linearen, durch monofunktionelle Einheiten terminierte Polydiorganosiloxanen, welche tri- und tetrafunktionelle Einheiten enthalten können. Der Wert von n in Formel (II) bestimmt die Viskosität der Polydiorganosiloxane (II). Die Viskosität liegt vorzugsweise im Bereich von 10 bis 1 000 000 mm²/s, wobei Viskositäten von 500 bis 50 000 mm²/s besonders bevorzugt sind.

Als ungesättigte Reste (entweder statistisch verteilt, weniger als zwei im Siloxan A oder statistisch verteilt, mehr als zwei im Siloxan B) können alle bekannten ungesättigten Reste, die der Hydrosilylierung zugänglich sind, verwendet werden. Dabei sind Reste wie z.B. Vinyl-, Allyl-, Methacryl-, Hexenyl- aber auch Reste mit Dreifachbindungen bevorzugt. Besonders bevorzugt sind Vinylreste.

Die Organosiloxane tragen neben den Si-H-Gruppen bzw. den ungesättigten Gruppen weitere Reste R, wobei Methylgruppen bevorzugt sind. R kann jedoch auch jeder andere bekannte Kohlenwasserstoffrest sein. Das schließt u. a. folgende Reste ein: n-Alkylreste mit 2 bis 20 Kohlenstoffatomen, wie z.B. Ethyl-, Hexyl-, Cyclohexyl-; iso-Alkylreste mit 3 bis 20 Kohlenstoffatomen, wie Isopropyl- und Isoamylreste; Alkylreste mit tertären Kohlenstoffatomen, wie tert-Butyl- und tert-Pentyl-; aromatische Kohlenwasserstoffreste, wie z. B. Phenyl-, Naphtyl-, Anthrylreste; Alkylarylreste, bei denen das Silicium entweder an einem aromatischem Kohlenstoffatom, wie z. B. bei Tolylresten, oder an einem aliphatischem Kohlenstoffatom, wie z. B. bei Benzylresten, gebunden ist; sowie substituierte Kohlenwasserstoffreste, wie z. B. Trifluorpropyl-, Cyanoethyl-, Aminopropyl-, Alkoxyaryl-, Alkoxyalkyl- und Halogenarylreste.

Die Herstellung der Organosiloxane kann in an sich bekannter Weise durch Cohydrolyse der entsprechenden Chlorsilane sowie durch Polymerisations- oder Polykondensationsreaktionen von niedermolekularen Ausgangsstoffen erfolgen. Z. B. sind Organosiloxane mit seitenständigen Si-H-Gruppen durch sauer katalysierte Äquilibrierungsreaktion des Hydrolyseproduktes von Methyldichlorsilan mit Hexamethylcyclotrisiloxan und Hexamethyldisiloxan zugänglich. Durch Äquilibrierungen unter Einbeziehung von Tetramethyldisiloxan sind Polymere mit endständigen Si-H-Gruppen synthetisierbar. In analoger Weise kann man z. B. vinylgruppenhaltige Polydiorganosiloxane durch sauer oder basisch katalysierte Äquilibrierungsreaktion aus Octamethylcyclotetrasiloxan, Tetramethyltetravinylcyclotetrasiloxan und Hexamethyldisiloxan oder auch Tetramethyldivinyldisiloxan herstellen. Derartige Prozesse sind dem Fachmann geläufig und brauchen hier nicht näher erläutert zu werden. Die so hergestellten Produkte sind beispielsweise als Ausgangsstoffe für die Herstellung von additionsvernetzendem Kautschuk bekannt und handelsüblich.

Problematischer ist die Zugänglichkeit von Produkten mit weniger als zwei funktionellen Gruppen im Molekül. Eine einfache Herstellmöglichkeit besteht in der Äquilibrierung von funktionellen Siloxanen mit zwei oder mehr funktionellen Gruppen mit Polydimethylsiloxanen. Z. B. erhält man durch Äquilibrierung von gleichen Masseteilen dimethylvinylsilylterminierten Polydimethylsiloxanen mit trimethylsilylterminierten Polydimethylsiloxanen gleicher Viskosität ein Polymer mit statistisch verteilt, durchschnittlich einer Dimethylvinylsilylgruppe pro Molekül. Im Gegensatz zu der einfachen Mischung der Siloxane ergibt das Äquilibrat mit einem polyfunktionellen Hydrogensiloxan und Platinkatalysator kein Gel.

Als Äquilibrierkatalysatoren können alle dem Fachmann bekannten sauren oder basischen Katalysatoren verwendet werden, wie saure Ionenaustauscher, Perfluoralkansulfonsäuren, Perfluoralkansäuren, Alkalihydroxide, Alkalisilanolate. Bei der Herstellung von Si-H-funktionellen Polyorganosiloxanen können bekanntermaßen nur saure Katalysatoren eingesetzt werden. Die Äquilibrierung wird bis zu einem Gleichgewicht geführt, bei dem ca. 13 Gew.-% cyclische Siloxane vorliegen, die bei Bedarf in einem zusätzlichen Schritt entfernt werden müssen.

Bevorzugte Katalysatoren für die Äquilibrierung von verschiedenen Polyorganosiloxanen sind Perfluoralkansulfonsäuren und Phosphornitrilchloride bzw. deren Umsetzungsprodukte. Bei Verwendung dieser Katalysatoren erweist es sich als vorteilhaft, daß man die Verteilung der funktionellen Gruppen zu einem Gleichgewicht bringen kann, ohne daß eine nennenswerte Bildung von flüchtigen cyclischen Siloxanen auftritt. Ein besonders geeigneter Phosphornitrilchloridkatalysator ist in DE 43 44 664 offenbart.

Die Umsetzung der Siloxane A und B geschieht in Gegenwart von bekannten Hydrosilylierungskatalysatoren, z. B. eines Platinkatalysators. Derartige Katalysatoren sind z.B. als Speier-Katalysator oder Karsted-Katalysator dem Fachmann bekannt. Zur Steuerung eines gezielten Reaktionsverlaufes kann der Einsatz von Inhibitoren, wie z. B. von Acetylenalkoholen, vorteilhaft sein.

Das durch Umsetzen von A und B erhaltene Polyorganosiloxan ist zu 5 bis 100 Gew.-%, vorzugsweise zu 30 bis 95 Gew.-%, bezogen auf die gesamte Zubereitung, in den erfindungsgemäßen Entschäumerzubereitungen enthalten.

Üblicherweise werden die beschriebenen, erfindungsgemäßen Entschäumerzubereitungen hergestellt, indem

- Organosiloxan A,
- Organosiloxan B,
- 0 bis 95 Gew.-%, bezogen auf die gesamte Zubereitung, eines oder mehrere Polyorganosiloxane einer Viskosität von 20 bis 2 000 000 mm$^2$/s
- sowie gegebenenfalls amorphe hydrophile und/oder hydrophobe, gefällte und/oder pyrogene Kieselsäure vermischt werden und in dieser Mischung die Hydrosilylierung erfolgt.

Die Herstellung der erfindungsgemäßen Entschäumer erfolgt durch das homogene Vermischen aller Komponenten, wobei die Mischreihenfolge unwesentlich ist.

Beispielsweise kann

- die Kieselsäure, vorzugsweise 0,5 bis 15 Gew.-%, bezogen auf die gesamte Zubereitung und mit einer BET-Oberfläche von 50-400 m$^2$/g, vor der Mischung aller Komponenten in dem Organosiloxan A und/oder in dem Organosiloxan B und/oder in den Ausgangsstoffen zu deren Herstellung und/oder in dem gegebenenfalls zugesetzten Polyorganosiloxan dispergiert werden oder
- die Herstellung des Organosiloxanes A in Gegenwart von bevorzugt mindestens 1 Gew.-% Kieselsäure, bezogen auf die gesamte Zubereitung, erfolgen oder
- hydrophile Kieselsäure durch Erhitzen in dem Organosiloxan A und/oder in den Ausgangsstoffen zu dessen Herstellung und/oder in dem Organosiloxan B und/oder in dem gegebenenfalls zugesetzten Polyorganosiloxan bei 100 bis 250 °C über 10 min. bis 24 h in-situ hydrophobiert werden, wobei die in-situ Hydrophobierung der hydrophilen Kieselsäure und die Herstellung des Organosiloxanes A vorzugsweise gleichzeitig erfolgt.

Für in-situ-Hydrophobierungen, die dem Fachmann bekannt sind, wird die Kieselsäure im Polyorganosiloxan homogen verteilt und durch Erhitzen in Gegenwart eines Silylierungsmittels wie Polydimethylsiloxan, cyclische Diorganosiloxane, Dimethyldichlorsilan, Octyltrichlorsilan oder Hexamethyldisilazan, gegebenenfalls in Gegenwart von Katalysatoren, hydrophobiert.

Es ist z. B. möglich, eine hydrophile Kieselsäure in einem Polydimethylsiloxan zu hydrophobieren und diese Mischung mit dem durch Umsetzen von A und B erhaltenen Polyorganosiloxan zu homogenisieren. Die Verteilung der hydrophilen (inclusive der in-situ-Hydrophobierung) oder hydrophoben Kieselsäure kann auch in Polyorganosiloxan A oder B erfolgen, die anschließend miteinander in der beschriebenen Weise umgesetzt werden. Die Kombination der Äquilibrierung zur Herstellung von A oder B mit der "in situ"-Hydrophobierung der Kieselsäure ist ebenfalls möglich. Es ist aber auch möglich, daß die Hydrophobierung der Kieselsäure den letzten Schritt bei der Herstellung des erfindungsgemäßen Entschäumers darstellt.

In speziellen Fällen sind die erfindungsgemäßen Entschäumerzubereitungen jedoch auch ohne den Zusatz von Kieselsäure wirksam, beispielsweise bei der Schaumbekämpfung in Mineralölen.

Bei der Hydrosilylierung können alle Komponenten der erfindungsgemäßen Entschäumerzubereitung zugegen sein. Rühren und Erhitzen auf 40°C bis 150°C ist für den Reaktionsverlauf und die Vollständigkeit der Umsetzung vorteilhaft. Der Abschluß der Reaktion ist z. B. an einer konstanten Viskosität oder durch Analyse der Si-H-Gruppen erkennbar. Erfahrungsgemäß ist die Reaktion, die mit 5 bis 100 ppm Platin (z. B. als Speier-Katalysator) katalysiert ist, nach 0,1 bis 4 h bei 50 bis 200 °C abgeschlossen.

Besonders bevorzugt ist es, wenn alle Komponenten miteinander homogen vermischt werden und die Umsetzung der Polyorganosiloxane A und B durch Zugabe des Platin- oder eines anderen Hydrosilylierungskatalysators als letzter Schritt erfolgt.

Als weitere Komponenten können die erfindungsgemäßen Entschäumerzubereitungen bekannte Produkte, wie z. B. QM-Harze, lineare oder cyclische Siloxane einer Viskosität von 0,65 bis zu mehreren Millionen mm²/s, polyethermodifizierte Polysiloxane, Fettalkohole, Fettsäureamide, Polyurethane, Wachse, Aluminiumoxide, Aluminiumsilikate, Titanoxide, Mineralöle, fette Öle, Fettsäuren, Tenside u.v.a.m. enthalten.

Die erfindungsgemäßen Entschäumer enthalten weder störende Mengen an unumgesetzten Si-H-Gruppen, noch besteht bei der Herstellung die Gefahr einer Gelierung.

Die erfindungsgemäßen Entschäumer können zur Bekämpfung von Schäumen in wäßrigen und nichtwäßrigen Systemen verwendet werden.

Bei der Anwendung in wäßrigen Systemen, z. B. Laticees, Abwasser oder bei Waschprozessen, z. B. in Flüssigwaschmitteln, ist die Anwendung als Emulsion bevorzugt. Die Herstellung derartiger Emulsionen ist dem Fachmann bekannt. Bei der Anwendung in Emulsionen kann die Umsetzung von Siloxan A und Siloxan B auch während oder nach dem Emulgierprozeß erfolgen.

Eine Einbringung der erfindungsgemäßen Entschäumer in pulverförmige Waschmittel in bekannter Weise ist ebenfalls möglich.

Es können auch selbstemulgierende Entschäumerformulierungen auf Grundlage der erfindungsgemäßen Entschäumer hergestellt werden.

**Ausführungsbeispiele**

Alle Viskositätsangaben beziehen sich auf 25°C.

I. Herstellung des Organosiloxanes A mit statistisch verteilten, durchschnittlich weniger als zwei funktionellen Gruppen

Beispiel A 1

600 Teile eines dimethylvinylsiloxyterminierten Polydimethylsiloxanes einer Viskosität von 10000 mm²/s und 200 Teile eines trimethylsiloxyterminierten Polydimethylsiloxanes einer Viskosität von 350 mm²/s wurden in Gegenwart von 20 ppm Phosphornitrilchlorid 4 h bei Raumtemperatur gerührt und anschließend mit 50 ppm Trisisooctylamin neutralisiert. Es wurde ein Polymer mit statistisch verteilt durchschnittlich 1 ungesättigten Gruppe pro Molekül erhalten. Die Untersuchung des hergestellten Organosiloxans mittels GPC (Gelpermeationschromatografie) zeigte eine einheitliche Molekulargewichtsverteilung und ließ überraschenderweise keine Zunahme an oligomeren cyclischen Siloxanen erkennen.

Beispiel A 2

Versuchsdurchführung analog Beispiel A 1. Als Katalysator kam Trifluormethansulfonsäure zum Einsatz. Die Reaktionszeit bei einer Temperatur von 80 °C betrug 2 h. Es wurde ein Polymer mit statistisch verteilt durchschnittlich 1 ungesättigten Gruppe pro Molekül erhalten. Mittels GPC konnte eine einheitliche Molekulargewichtsverteilung und keine Zunahme an oligomeren cyclischen Siloxanen nachgewiesen werden.

Beispiel A 3

200 Teile eines dimethylvinylsiloxyterminierten Polydimethylsiloxanes einer Viskosität von 500 mm²/s und 700 Teile eines trimethylsiloxyterminierten Polydimethylsiloxanes einer Viskosität von 20 000 mm²/s wurden in Gegenwart von 20 ppm Phosphornitrilchlorid 4 h bei Raumtemperatur gerührt und anschließend 50 ppm Trisisooctylamin zur Neutralisation des Katalysators zugegeben. Erhalten wurde ein Polymer mit statistisch verteilt durchschnittlich 1,25 ungesättigten Gruppen. Mittels GPC konnte eine einheitliche Molekulargewichtsverteilung und keine Zunahme an oligomeren cyclischen Siloxanen nachgewiesen werden.

Beispiel A 4

10 Teile eines Siloxans der folgenden durchschnittlichen Struktur $(CH_3)_3SiO[Si(CH_3)(H)O]_4[Si(CH_3)_2O]_8Si(CH_3)_3$ und 1000 Teile eines trimethylsiloxyterminierten Polydimethylsiloxanes einer Viskosität von 20000 mm²/s wurden in Gegenwart von 20 ppm Phosphornitrilchlorid 4 h bei Raumtemperatur gerührt und anschließend 50 ppm Trisisooctylamin zur Neutralisation des Katalysators zugegeben. Erhalten wurde ein Polymer mit statistisch verteilt durchschnittlich 1,85 siliciumgebundenen Wasserstoffatomen. Mittels GPC konnte eine einheitliche Molekulargewichtsverteilung und keine Zunahme an oligomeren cyclischen Siloxanen nachgewiesen werden.

Beispiel A 5

400 Teile eines dimethylvinylsiloxyterminierten Polydimethylsiloxanes einer Viskosität von 10000 mm²/s und 800 Teile eines trimethylsiloxyterminierten Polydimethylsiloxanes einer Viskosität von 8000 mm²/s wurden in Gegenwart von 20 ppm Phosphornitrilchlorid 4 h bei Raumtemperatur gerührt und anschließend mit 50 ppm Trisisooctylamin neutralisiert. Es wurde ein Polymer mit statistisch verteilt durchschnittlich 0,36 ungesättigten Gruppen pro Molekül erhalten. Die Untersuchung des hergestellten Organosiloxans mittels GPC (Gelpermeationschromatografie) zeigte eine einheitliche Molekulargewichtsverteilung und ließ überraschenderweise keine Zunahme an oligomeren cyclischen Siloxanen erkennen.

II. Herstellung des Organosiloxanes B mit statistisch verteilten, durchschnittlich mehr als zwei funktionellen Gruppen

Beispiel B 1

200 Teile eines trimethylsiloxyterminierten Polydimethylsiloxanes einer Viskosität von 50 mm²/s, 100 Teile Tetravinyltetramethylcyclotetrasiloxan und 600 Teile Octamethylcyclotetrasiloxan wurden in Gegenwart von 50 Teilen saurem Ionenaustauscher 16 h auf 65°C erhitzt und anschließend der Katalysator abgetrennt. Erhalten wurde ein Polymer einer Viskosität von 900 mm²/s, einem Gehalt an cyclischen Oligomeren von 11 Gew.-% sowie ca. 27 statistisch verteilten, seitenständigen Vinylgruppen.

Beispiel B 2

800 Teile eines dimethylvinylsiloxyterminierten Polydimethylsiloxanes einer Viskosität von 500 mm²/s und 20 Teile Tetravinyltetramethylcyclotetrasiloxan wurden in Gegenwart von 50 Teilen saurem Ionenaustauscher 16 h auf 65°C erhitzt und anschließend der Katalysator abgetrennt. Erhalten wurde ein Polymer einer Viskosität von 1100 mm²/s, einem Gehalt an cyclischen Oligomeren von 12 Gew.-% sowie je zwei endständigen und ca. 6 statistisch verteilten seitenständigen Vinylgruppen pro Polymerkette.

Beispiel B 3

Durch Umsetzung von Hexamethyldisiloxan, dem Hydrolyseprodukt von Methyldichlorsilan, mit Octamethylcyclotetrasiloxan wurde ein Polymer mit folgender durchschnittlicher Struktur $(CH_3)_3SiO[Si(CH_3)(H)O]_4[Si(CH_3)_2O]_8Si(CH_3)_3$ und durchschnittlich 4 siliciumgebundenen Wasserstoffatomen pro Molekül erhalten.

Beispiel B 4

990 Teile eines trimethylsiloxyterminierten Polydimethylsiloxanes einer Viskosität von 20000 mm²/s und 10 Teile eines Polymers der Formel $(CH_3)_3SiO[Si(CH_3)(H)O]_{50}Si(CH_3)_3$ wurden in Gegenwart von 20 ppm Phosphornitrilchlorid 6 h bei Raumtemperatur gerührt und anschließend der Katalysator mit 50 ppm Trisisooctylamin neutralisiert. Es wurde ein Polymer mit statistisch verteilten, durchschnittlich 10 siliciumgebundenen Wasserstoffatomen erhalten.

### III. Herstellung der Entschäumerzubereitungen

### Beispiel E

### Herstellung einer Dispersion von Kieselsäure in Polydimethylsiloxan

272 Teile hydrophile pyrogene Kieselsäure mit einer BET-Oberfläche von 200g/m$_2$ und 1728 Teile eines Polydimethylsiloxanes einer Viskosität von 200 mm$_2$/s wurden innig verrührt und 3 mal in einer Kolloidmühle gemahlen. Anschließend wurde die Mischung 5 h auf 130°C erhitzt und erneut in der Kolloidmühle vermahlen. Die erhaltene Kieselsäuredispersion wurde für die weitere Herstellung der Entschäumer verwendet.

### Herstellung der Entschäumer E 1 bis E 6

Die gemäß Beispiel E hergestellte Kieselsäuredispersion wurde mit den entsprechend der Beispiele A 1 bis B 4 hergestellten Organosiloxanen vermischt und mit 0,3 Masseteilen an 0,1-molarer Hexachloroplatinsäure in Isopropanol (Speier-Katalysator) versetzt. Diese Mischung wurde 1 h auf 70°C erhitzt, während dessen die Umsetzung der siliciumgebundenen Wasserstoffatome mit den ungesättigten Kohlenwasserstoffresten erfolgte.

Tabelle 1 enthält die Gew.-teile der einzelnen Komponenten für die Herstellung der Entschäumerzubereitungen E 1 bis E 5.

Tabelle 1

| Bsp. | Siloxan A | Gew.-teile A | Siloxan B | Gew.-teile B | Mol-Verhältnis Si-H zu Si-Vinyl | Gew.-teile E |
|------|-----------|--------------|-----------|--------------|-------------------------------|--------------|
| E 1 | A 4 | 240 | B 2 | 23 | 1,0 | 250 |
| E 2 | A 1 | 200 | B 4 | 40 | 0,8 | 600 |
| E 3 | A 4 | 200 | B 1 | 6 | 1,0 | 600 |
| E 4 | A 2 | 200 | B 3 | 2 | 0,9 | 600 |
| E 5 | A 3 | 240 | B 4 | 50 | 1,0 | 250 |
| E 6 | A 5 | 240 | B 4 | 5,4 | 1,0 | 250 |

Obwohl stöchiometrische bzw. fast stöchiometrische Mengen der Siloxane mit siliciumgebundenen Wasserstoffatomen und der Siloxane mit ungesättigten Kohlenwasserstoffresten verwendet wurden, kam es zu keinem übermäßigen Viskositätsanstieg oder gar zur Gelierung der Produkte.

### Vergleichsbeispiel V

Analog Beispiel E wurde eine Kieselsäuredispersion aus 7 Teilen Kieselsäure und 93 Teilen Polydimethylsiloxan einer Viskosität von 1000 mm$^2$/s hergestellt. Diese Dispersion wurde, ohne Zumischung weiterer Komponente, als Vergleichsentschäumer getestet.

### Vergleichbeispiel

Analog Beispiel E wurde ein Entschäumer hergestellt, der anstatt des in Beispiel A 2 hergestellten Organosiloxanes die unumgesetzte Mischung aus 600 Teilen eines dimethylvinylsiloxyterminierten Polydimethylsiloxans einer Viskosität von 10000 mm$^2$/s und 200 Teilen eines trimethylsiloxyterminierten Polydimethylsiloxans einer Viskosität von 350 mm$^2$/s enthielt, in welcher die Vinylgruppen demzufolge nicht statistisch verteilt waren. Beim Erhitzen in Gegenwart des Platinkatalysators gelierte der Ansatz und war damit unbrauchbar.

### IV. Anwendung der Entschäumerzubereitungen

### Prüfung der Entschäumer als Waschpulverzusatz

5 g der Entschäumer wurden mit 95 g Natriumsulfat in einem Mörser innig vermischt. Dieses Entschäumerpulver wurde in ein handelsübliches, aber entschäumerfreies Waschpulver eingebracht, so daß das Waschpulver 0,2 Gew.-%

Silicon enthält. 4 g dieses Waschpulvers wurden in 400 ml entionisiertem Wasser gelöst und in einem Becherglas auf einer Heizplatte 30 min bei 500 min⁻¹ mit einem Käfigrührer gerührt. Dabei stieg die Temperatur von 25 C auf 95°C an. Nach 0,5, 2, 10, 20 und nach 30 min wurden die Schaumhöhe abgelesen und addiert ($H_E$).

Der Grad der Entschäumung, der ein Maß für die Wirksamkeit des Entschäumers darstellt, wird wie folgt berechnet:

$$E \text{ (in\%)} = (H_A - H_E)/H_A * 100$$

Dabei bedeutet $H_A$ die Summe der Schaumhöhen, die bei einem Vergleichsversuch mit dem Waschpulver ohne Entschäumer ermittelt wurden.

Tabelle 2 enthält den Grad der Entschäumung für die eingesetzten Entschäumer.

Tabelle 2

| Entschäumer | Entschäumung in % |
|---|---|
| E 1 | 70 |
| E 2 | 84 |
| E 3 | 74 |
| E 4 | 81 |
| E 5 | 86 |
| E 6 | 76 |
| V | 48 |

Die Überlegenheit der erfindungsgemäßen Entschäumer ist offensichtlich.

Prüfung der Entschäumer als Emulsionen

Je 10 Teile jedes Entschäumers wurden mit je 4 Teilen Sorbitanmonostearat, 3 Teilen Polyoxyethylen(40)stearat und 83 Teilen Wasser in eine wäßrige Emulsionen überführt. Zur Prüfung der Entschäumungswirkung wurden 250 ml einer entschäumerhaltigen Tensidlösung mehrmals 90 s mit einem Mixer aufgeschäumt und der Schaumzerfall als Funktion der Zeit beobachtet.

Es wurden folgende Varianten getestet:

Variante 1: 4 Gew.-% Polyoxyethylen(10)isotridecylalkohol und 0,1 ml Entschäumer, 4-maliges Aufschäumen

Variante 2: 4 Gew.-% Natriumalkylarylsulfonat und 0,2 ml Entschäumeremulsion, 4-maliges Aufschäumen

Variante 3: 2 Gew.-% Polyvinylalkohol und 0,2 ml Entschäumeremulsion, 2-maliges Aufschäumen

Die Entschäumerwirkung wird wie folgt ermittelt:
Nach Abschalten des Mixers wird die Schaumhöhe $H_0$ gemessen. Im Abstand von 1 min wird die verbleibende Restschaumhöhe über einen Zeitraum von insgesamt 10 min verfolgt ($H_1$ bis $H_{10}$).
Der Schaumhöhen-Zeit-Verlauf wird graphisch dargestellt und die Fläche (Integral der Schaumhöhe über die Zeit $I_E$) berechnet. Der Versuch wird ohne Entschäumer wiederholt, woraus sich das Schaumhöhen-Zeit-Integral $I_A$ ergibt.
Der Grad der Entschäumung, der ein Maß für die Wirksamkeit des Entschäumers darstellt, wird nun wie folgt berechnet:

$$E \text{ (in \%)} = (I_A - I_E)/I_A * 100.$$

Zur Auswertung wurde der Mittelwert der Entschäumungswirkungen von den einzelnen, direkt nacheineinder durchgeführten Aufschäumversuchen verwendet.

Die Ergebnisse der Entschäumer (Entschäumung in %) sind in Tabelle 3 zusammengestellt.

Tabelle 3

| Entschäumer | Variante 1 | Variante 2 | Variante 3 |
|---|---|---|---|
| E 1 | 87 | 80 | 90 |
| E 2 | 85 | 74 | 88 |
| E 3 | 78 | 71 | 85 |
| E 4 | 83 | 68 | 89 |
| E 5 | 83 | 68 | 89 |
| E 6 | 75 | 72 | 83 |
| E 2 - A[1] | 83 | 78 | 88 |
| V | 58 | 30 | 52 |

[1] Beim Entschäumer E 2-A, der in der Rezeptur dem Entschäumer E 2 entspricht, erfolgte die Hydrosilylierung während der Emulsionsherstellung durch Erhitzen der Voremulsion auf 70°C für 1 h.

Auch hierbei wird die gute Wirksamkeit der erfindungsgemäßen Entschäumer deutlich.

**Patentansprüche**

1. Entschäumerzubereitungen auf der Basis von Siloxanen, enthaltend mindestens ein verzweigtes, flüssiges Polyorganosiloxan, welches hergestellt wird durch Umsetzung von

- einem Organosiloxan A mit
- einem Organosiloxan B, in Gegenwart eines Hydrosilylierungen fördernden Katalysators, wobei die Organosiloxane A und B der allgemeinen Formel

$$R_a(R^1O)_bR^2_cSiO_{(4-a-b-c)/2} \qquad (I)$$

genügen,
worin
R gleiche und/oder verschiedene, substituierte und/oder unsubstituierte, gesättigte, aliphatische und/oder aromatische, einwertige Kohlenwasserstoffreste mit 1 bis 30 Kohlenstoffatomen,
$R^1$ entweder Wasserstoff oder R und
$R^2$ entweder Wasserstoff oder ungesättigte Kohlenwasserstoffreste mit der Maßgabe darstellen, daß bei Organosiloxan A pro Molekül statistisch verteilt, durchschnittlich weniger als zwei gleichartige Reste $R^2$ sowie bei Organosiloxan B pro Molekül statistisch verteilt, durchschnittlich mehr als zwei gleichartige Reste $R^2$ gebunden sind und pro Siloxan A oder B jeweils nur eine Art an funktionellen Gruppen vorliegt, sowie die Summe (a+b+c) ganze oder gebrochene Zahlen zwischen 1 und 3 annimmt.

2. Entschäumerzubereitungen nach Anspruch 1, dadurch gekennzeichnet, daß das Organosiloxan A statistisch verteilt durchschnittlich 0,1 bis 1,7 funktionelle Gruppen pro Molekül aufweist.

3. Entschäumerzubereitungen nach Anspruch 2, dadurch gekennzeichnet, daß das Organosiloxan A statistisch verteilt durchschnittlich 0,2 bis 1,5 funktionelle Gruppen pro Molekül aufweist.

4. Entschäumerzubereitungen nach Anspruch 2, dadurch gekennzeichnet, daß das Organosiloxan A statistisch verteilt durchschnittlich 0,3 bis 1,0 funktionelle Gruppen pro Molekül aufweist.

5. Entschäumerzubereitungen nach Anspruch 1, dadurch gekennzeichnet, daß das Organosiloxan B statistisch verteilt durchschnittlich mehr als 3 funktionelle Gruppen pro Molekül aufweist.

6. Entschäumerzubereitungen nach Anspruch 5, dadurch gekennzeichnet, daß das Organosiloxan B statistisch verteilt durchschnittlich 4 bis 20 funktionelle Gruppen pro Molekül aufweist.

7. Entschäumerzubereitungen nach Anspruch 1, dadurch gekennzeichnet, daß das stöchiometrische Verhältnis der statistisch verteilten funktionellen Gruppen von Organosiloxan A zu Organosiloxan B 0,8 bis 1,2 beträgt.

8. Entschäumerzubereitungen nach Anspruch 1, dadurch gekennzeichnet, daß das Organosiloxan A erhalten wird durch Umsetzung von einem Organosiloxan mit statistisch verteilten, durchschnittlich mindestens 2 funktionellen Gruppen mit einem Organosiloxan, welches keine funktionellen Gruppen aufweist.

9. Entschäumerzubereitungen nach Anspruch 8, dadurch gekennzeichnet, daß das Organosiloxan A erhalten wird durch Umsetzung von dimethylvinylsiloxyterminiertem Polydimethylsiloxan mit trimethylsiloxyterminiertem Polydimethylsiloxan in Gegenwart eines die Äquilibrierung fördernden Katalysators.

10. Entschäumerzubereitungen nach Anspruch 9, dadurch gekennzeichnet, daß als Äquilibrierungkatalysatoren zur Herstellung des Organosiloxanes A saure oder basische Verbindungen verwendet werden.

11. Entschäumerzubereitungen nach Anspruch 1, dadurch gekennzeichnet, daß als die Hydrosilylierung fördernder Katalysator Platin oder Platinverbindungen eingesetzt werden.

12. Verfahren zur Herstellung von Entschäumerzubereitungen nach Anspruch 1 bis 11, dadurch gekennzeichnet, daß

- Organosiloxan A,
- Organosiloxan B,
- 0 bis 95 Gew.-%, bezogen auf die gesamte Zubereitung, eines oder mehrerer Polyorganosiloxane einer Viskosität von 20 bis 2 000 000 mm²/s
- sowie gegebenfalls amorphe hydrophile und/oder hydrophobe, gefällte und/oder pyrogene Kieselsäure

  vermischt werden und in dieser Mischung die Hydrosilylierung erfolgt.

13. Verfahren nach Anspruch 12, dadurch gekennzeichnet, daß vor der Mischung aller Komponenten die amorphe hydrophile und/oder hydrophobe, gefällte und/oder pyrogene Kieselsäure in dem Organosiloxan A und/oder in dem Organosiloxan B und/oder in den Ausgangsstoffen zu deren Herstellung und/oder in dem gegebenenfalls zugesetzten Polyorganosiloxan dispergiert wird.

14. Verfahren nach Anspruch 12, dadurch gekennzeichnet, daß die Herstellung des Organosiloxanes A in Gegenwart der Kieselsäure erfolgt.

15. Verfahren nach Anspruch 12, dadurch gekennzeichnet, daß 0,5 bis 15 Gew.-% amorphe hydrophile und/oder hydrophobe, gefällte und/oder pyrogene Kieselsäure, bezogen auf die gesamte Zubereitung, eingesetzt wird.

16. Verfahren nach Anspruch 15, dadurch gekennzeichnet, daß mindestens 1 Gew.-% Kieselsäure, bezogen auf die gesamte Zubereitung, eingesetzt werden.

17. Verfahren nach Anspruch 12, dadurch gekennzeichnet, daß hydrophile Kieselsäure durch Erhitzen in dem Organosiloxan A und/oder in den Ausgangsstoffen zu dessen Herstellung und/oder in dem Organosiloxan B und/oder in dem gegebenenfalls zugesetzten Polyorganosiloxan bei 100 bis 250 °C über 10 min. bis 24 h in-situ hydrophobiert wird.

18. Verfahren nach Anspruch 17, dadurch gekennzeichnet, daß die in-situ Hydrophobierung der hydrophilen Kieselsäure und die Herstellung des Organosiloxanes A gleichzeitig erfolgen.

Europäisches Patentamt

**EUROPÄISCHER RECHERCHENBERICHT**

Nummer der Anmeldung

EP 95 11 9089

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 516 109 (DOW CORNING TORAY SILICONE COMPANY) <br> * das ganze Dokument * <br> --- | 1 | B01D19/04 <br> C11D3/00 <br> C11D3/37 <br> C08L83/04 |
| A | EP-A-0 217 501 (DOW CORNING LIMITED) <br> * Ansprüche * <br> --- | 1 | |
| A <br> D | GB-A-2 257 709 (DOW CORNING S.A.) <br> * das ganze Dokument * <br> & DE-A-42 23 644 <br> --- | 1 | |
| A,D | US-A-4 477 626 (T.SUZUKI) <br> * Ansprüche * <br> --- | 1 | |
| A,D | EP-A-0 434 060 (DOW CORNING KK) <br> * Ansprüche * <br> --- | 1 | |
| A,D | EP-A-0 499 364 (DOW CORNING CORPORATION) <br> * Ansprüche * <br> --- | 1 | |
| A <br> D | US-A-4 741 861 (F.OKADA ET AL) <br> * Ansprüche * <br> & JP-A-61 197 007 <br> ----- | 1 | **RECHERCHIERTE SACHGEBIETE (Int.Cl.6)** <br><br> B01D <br> C11D <br> C08L <br> C08F |

Der vorliegende Recherchenbericht wurde für alle Patentansprüche erstellt

| Recherchenort | Abschlußdatum der Recherche | Prüfer |
|---|---|---|
| BERLIN | 29.März 1996 | Cordero Alvarez, M |

EPO FORM 1503 03.82 (P04C03)